# EUROPÄISCHE PATENTANMELDUNG

(11) **EP 1 524 628 A2**
(43) Veröffentlichungstag der Anmeldung: **20.04.2005**
(21) Anmeldenummer: 04400049.5
(22) Anmeldetag: 22.09.2004
(51) Int. Cl.: G07C 5/00

(54) **Verfahren zur Überwachung von Vorgängen im Kraftfahrzeug**

(30) Priorität: 16.10.2003 DE 10348108
(71) Anmelder: Bayerische Motoren Werke Aktiengesellschaft, 80809 München (DE)
(72) Erfinder: Baur, Richard, 85276 Pfaffenhofen (DE); Rauh, Helmut, 81543 München (DE); Achatz, Klaus, 82205 Gilching (DE)

(57) **Zusammenfassung**

Bei einem Verfahren zur Überwachung von Vorgängen im Kraftfahrzeug ist es bekannt, mit mindestens einem Mikrorechner diese Vorgänge in Abhängigkeit von Fahrzeugparametern zu berechnen und den jeweiligen Vorgang als fehlerhaft und den jeweiligen Fehler als kritisch oder unkritisch zu bewerten, und kritische Fehler sofort bei ihrem Auftreten und unkritische Fehler demgegenüber verzögert anzuzeigen. Erfindungsgemäß wird ein unkritischer Fehler dem Fahrzeugnutzer bis zu einer turnusmäßigen Wartung des Fahrzeugs nicht angezeigt und bei einer turnusmäßigen Wartung ausgegeben. Der unkritische Fehler wird dem Fahrzeugnutzer erst angezeigt, wenn eine anstehende turnusmäßigen Wartung des Fahrzeugs nicht durchgeführt wird.

## Beschreibung

Die Erfindung betrifft ein Verfahren zur Überwachung von Vorgängen im Kraftfahrzeug mit den Merkmalen des Oberbegriffs von Patentanspruch 1.

Derartige Verfahren sind in Kraftfahrzeugen allgemein gebräuchlich.

Für einen Fehler, der kritisch ist und sofort angezeigt wird, kann beispielhaft auf Verschleißanzeigen für Bremsbeläge hingewiesen werden. Dabei wird immer dann sofort ein Signallicht od. dgl. eingeschaltet, sobald einer der Bremsbeläge der Fahrzeugbetriebsbremse eine vorgegebene Dicke unterschreitet.

Weiter ist aus der DE 196 21 941 C und der US 4,053,868 eine verzögerte Ausgabe eines Warn- bzw. Fehlersignals bekannt. Dabei werden mittels einer der Anzeigevorrichtung vorgeschalteten Steuervorrichtung die Warn- bzw. Fehlersignale gespeichert und die Anzeigevorrichtung bei Erhalt eines bei einer Betriebsabschaltung des überwachten Systems erzeugten Ausschaltsignals zumindest. vorübergehend betätigt. Dem liegt der Gedanke zu Grunde, Betriebszustände, die erst mit größerer zeitlicher Verzögerung Maßnahmen erforderlich oder wünschenswert machen, erst bei einer Betriebsbeendigung anzuzeigen, so dass im Beispiel eines Kraftfahrzeuges der Fahrer während der Fahrt nur wirklich wichtige Signale angezeigt erhält. Auf diese Weise wird berücksichtigt, dass es in der Regel erwünscht ist, in einem Fahrzeug vielfältige Systeme und Funktionen zu überwachen, dass aber die damit verbundenen Signalanzeigen, wenn sie "zur Unzeit" auftreten, den Fahrer irritieren können. Gleichzeitig wird berücksichtigt, dass eine ständig auftretende Signalanzeige vom Fahrer leicht unbeachtet bleiben kann.

Des weiteren können Kraftfahrzeuge mit Überwachungsvorrichtungen ausgerüstet sein, die regelmäßig vorgegebene Systeme des Kraftfahrzeuges auf den jeweiligen Betriebszustand bzw. auf Fehlersignale abfragen und entsprechende Daten langfristig speichern. Mit einer gesonderten Abfrageeinheit können dann diese Daten angezeigt bzw. in Fehlersignale umgesetzt werden. Außerdem kann bei Auftreten eines Fehlers sofort eine Anzeige betätigt werden. Entsprechende Anordnungen sind Gegenstand der DE 32 29 411 A1

Aufgabe der Erfindung ist es, ein Verfahren der eingangs genannten Art zu schaffen, bei der unnötige Irritationen des Fahrers eines Kraftfahrzeuges vermieden werden, andrerseits aber die Fehleranzeige sicher wahrgenommen wird.

Diese Aufgabe wird erfindungsgemäß durch die Merkmale des Patentanspruchs 1 gelöst.

Ein kritischer Fehler, der eine sofortige Wahrnehmung erfordert, wird bei seinem Auftreten auch sofort angezeigt. Anders verhält es sich mit einem unkritischen Fehler. Der wird nicht beispielsweise beim Abstellen des Fahrzeugs angezeigt. Dies würde dem Fahrer gerade nicht die Möglichkeit eröffnen, den Fehler als unkritisch einzustufen. Vielmehr legt die Anzeige zu diesem Zeitpunkt für den Fahrer gerade den Eindruck nahe, es mit einem wichtigen Fehler zu tun zu haben, der ihm sogar noch nach dem Abstellen des Fahrzeugs angezeigt werden muss. Die damit verbundene Verunsicherung beeinträchtigt den Fahrer möglicherweise bei der weiteren Benutzung des Fahrzeugs.

Die Erfindung geht einen anderen Weg. Der Fehler wird dem Fahrzeugnutzer nicht angezeigt, sondern erst im Rahmen einer turnusmäßigen Wartung des Fahrzeugs ausgegeben. Er kann hierzu wie an sich üblich aus einem Fehlerspeicher ausgelesen und auch gelöscht werden.

Ein unkritischer Fehler wird dem Fahrzeugnutzer bis zu einer Wartung des Fahrzeugs nicht angezeigt. Erst wenn eine anstehende turnusmäßigen Wartung des Fahrzeugs nicht durchgeführt wird, wird der Fehler dem Fahrer angezeigt.

Dies hat den Vorteil, dass der Fahrer von dem unkritischen Fehler nichts mitbekommt, vorausgesetzt, er lässt regelmäßig die turnusmäßigen Wartungen des Fahrzeugs durchführen. Nur wenn der Fahrer bei der Durchführung der Wartungen nachlässig ist, bekommt er die (den) Fehler angezeigt. Dies hat zwei Effekte. Er wird einerseits auf die (den) Fehler selbst und andrerseits auf die Notwendigkeit, die Wartung durchzuführen, aufmerksam gemacht.

Vorstehend wird davon ausgegangen, dass bei der Wartung auch die Ursache des Fehlers beseitigt wird, beispielsweise bei einer messbaren geringfügigen Beeinträchtigung des Luftdurchsatzes als unkritischem Fehler bei der Wartung das zugehörige Luftfilter erneuert wird. Unterbleibt diese Maßnahme jedoch, ist als Verbesserung der Erfindung vorgesehen, den unkritischen Fehler dem Fahrzeugnutzer anzuzeigen, wenn die turnusmäßige Wartung des Fahrzeugs nicht vollständig durchgeführt wird. Dies hat wiederum zwei positive Auswirkungen. Es wird auf die weiterhin vorhandene Ursache des Fehlers und zugleich die Notwendigkeit aufmerksam gemacht, die Wartung vollständig durchzuführen bzw. durchführen zu lassen.

Damit ergibt sich ein Verfahren, bei dem unnötige Irritationen des Fahrers durch Anzeige von unkritischen Fehlern eines Kraftfahrzeuges weitestgehend vermieden werden, andrerseits aber die Fehleranzeige derartiger Fehler nicht verloren geht.

## Patentansprüche

1. Verfahren zur Überwachung von Vorgängen im Kraftfahrzeug, mit mindestens einem Mikrorechner, der diese Vorgänge in Abhängigkeit von Fahrzeugparametern berechnet, zur Bewertung eines Vorgangs als fehlerhaft und des jeweiligen Fehlers als kritisch oder unkritisch, bei dem kritische Fehler sofort bei ihrem Auftreten und ein unkritischer Fehler demgegenüber verzögert angezeigt wird,
**dadurch gekennzeichnet, dass** ein unkritischer Fehler dem Fahrzeugnutzer bis zu einer turnusmäßigen Wartung des Fahrzeugs nicht angezeigt wird, dass er bei einer turnusmäßigen Wartung ausgegeben wird und dass der unkritische Fehler dem Fahrzeugnutzer erst angezeigt wird, wenn eine anstehende turnusmäßige Wartung des Fahrzeugs nicht durchgeführt wird.

2. Verfahren nach Anspruch 1, **dadurch gekennzeichnet, dass** ein unkritischer Fehler dem Fahrzeugnutzer angezeigt wird, wenn eine turnusmäßige Wartung des Fahrzeugs nicht vollständig durchgeführt wird.
